Europäisches Patentamt

European Patent Office

Office européen des brevets

(19)

(11) Veröffentlichungsnummer: **0 246 413**
**A1**

(12) **EUROPÄISCHE PATENTANMELDUNG**

(21) Anmeldenummer: 87103790.9

(22) Anmeldetag: 16.03.87

(51) Int. Cl.4: **B01D 53/36** , B01J 37/02

(30) Priorität: 26.03.86 DE 3610338
28.07.86 DE 3625474

(43) Veröffentlichungstag der Anmeldung:
25.11.87 Patentblatt 87/48

(84) Benannte Vertragsstaaten:
AT BE CH DE ES GB IT LI NL SE

(71) Anmelder: KRAFTWERK UNION
AKTIENGESELLSCHAFT
Wiesenstrasse 35
D-4330 Mülheim (Ruhr)(DE)

(72) Erfinder: Hums, Erich, Dr., Dipl.-Chem.
Aschaffenburger Strasse 16
D-8520 Erlangen(DE)

(74) Vertreter: Mehl, Ernst, Dipl.-Ing. et al
Postfach 22 01 76
D-8000 München 22(DE)

(54) Plattenförmiger Katalysator.

(57) Bei einem plattenförmigen Katalysator zur Verminderung der Stickoxide in Rauchgasen besteht das Problem der Haftung der Katalysatormasse auf der Trägerplatte. Hierzu wird eine Keramikmasse als Zwischenschicht auf den Träger durch Flamm-oder Plasmaspritzen aufgebracht. Um die Haftung der Katalysatormasse auf der Zwischenschicht zu bessern, sieht die Erfindung vor, diese Zwischenschicht vor dem Aufbringen von Katalysatorbestandteilen mit einer Säure, vorzugsweise $H_2SO_4$, anzulösen.

EP 0 246 413 A1

## Plattenförmiger Katalysator

Die Erfindung bezieht sich auf einen plattenförmigen Katalysator zur Verminderung der Stickoxide in Rauchgasen in Gegenwart eines Reduktionsmittels, bestehend aus einem Träger, einer auf den Träger aufgebrachten sogenannten Zwischenschicht und einer auf der Zwischenschicht aufgebrachten titanoxidhaltigen Katalysatormasse.

Bei Plattenkatalysatoren, die notwendigerweise eines geeigneten Trägermaterials bedürfen, das mit Katalysatormasse beschichtet ist, besteht ein wesentliches Problem in der Haftung der Katalysatormasse auf dem Trägermaterial. An die Haftvermittlung werden besondere Anforderungen gestellt. Neben einer hinreichenden mechanischen Festigkeit gegenüber Schwingungen der Platten im Rauchgaskanal ist chemische Beständigkeit und auch eine hohe thermische Dauerbelastbarkeit gegenüber Temperaturschwankungen von mehreren hundert Grad zu gewährleisten.

Durch die DE-PS 28 53 023 (= US-PS 42 85 838) ist bereits ein plattenförmiger Katalysator zum Reduzieren von $NO_x$ in Rauchgas bekannt geworden, bei dem ein perforiertes Blech als Trägermaterial verwendet ist. Bei diesem vorbekannten Katalysator wird die Haftung des Katalysatormaterials auf dem plattenförmigen Träger durch eine Zwischenschicht aus Metall erreicht, welche in geschmolzenem Zustand auf dem Träger aufgesprüht wird. Auf den solchermaßen vorbehandelten Träger soll die Katalysatormasse durch Tauchen aufgebracht werden. Zur Verbesserung der Hafteigenschaften soll ein faserförmiges organisches Material der Katalysatormasse beigemischt werden. Der so beschichtete Träger soll mit der aufgebrachten katalytischen Substanz dann zwischen 300° und 500° C calciniert werden.

Der Erfindung liegt die Aufgabe zugrunde, einen Weg zu weisen, wie die Haftung der katalytischen Substanz auf dem Trägermaterial weiter zu verbessern ist. Dabei sollte eine möglichst hohe Standzeit bei Betriebstemperaturen bis zu 500° C erreicht werden.

Die Aufgabe wird durch die Merkmale des Anspruchs 1 gelöst. Weitere vorteilhafte Ausgestaltungen sind den Ansprüchen 2 bis 26 zu entnehmen.

Mit der erfindungsgemäßen Verwendung einer Keramikmasse als Zwischenschicht wird ein Material als Zwischenschicht verwandt, das in seinen Materialeigenschaften der darauf aufzubringenden Katalysatormasse so ähnlich wie irgendmöglich ist. Dabei ist von der Überlegung ausgegangen worden, daß gerinstmögliche thermische Spannungen zwischen der Zwischenschicht, der aufgebrachten Katalysatormasse und dem metallischen Träger entstehen, wenn die Ausdehnungskoeffizienten von Zwischenschicht, Katalysatormasse und metallischem Träger so nahe wie möglich beieinander liegen. Zusätzlich wird die Haftung zwischen der Katalysatormasse und der Oberfläche der Zwischenschicht dadurch weiter verbessert, daß diese Zwischenschicht ihrerseits im mikroskopischen Bereich genügende Oberflächenrauhigkeiten aufweist.

Eine weitere Verbesserung der Haftung der Katalysatormasse auf der Zwischenschicht läßt sich erreichen, wenn die Zwischenschicht in Weiterbildung der Erfindung aus Titandioxid besteht. In diesem Fall wird das gleiche Grundmaterial verwendet, das auch Hauptbestandteil der Katalysatormasse ist. Dabei wird davon ausgegangen, daß die rein mechanische Haftung der Titandioxidkristallite der Katalysatormasse auf der Zwischenschicht dadurch optimiert wird, daß Zwischenschicht und Katalysatormasse korrespondierende Materialeigenschaften besitzen wie ausreichende Oberflächenrauhigkeit, Porosität und ähnliche thermische Ausdehnungskoeffizienten.

In vorteilhafter Weiterbildung der Erfindung kann die Keramikmasse der Zwischenschicht oberflächlich chemisch angelöst werden. Durch die Anlösung der Zwischenschicht wird ein Teil der Keramikmasse in ein Oxid umgewandelt, welches für die Katalysatorherstellung heranziehbar ist. Auf diese Weise wird die auf dem Trägermaterial gut haftende Keramikzwischenschicht selbst zur Herstellung der Katalysatormasse mit herangezogen.

Zweckmäßigerweise können in Ausgestaltung der Erfindung weitere Bestandteile des Katalysators nach dem Anlösevorgang, durch Tränken in einer Lösung bzw. in einer Suspension mit diesen weiteren Katalysatorbestandteilen aufgebracht werden. Diese Arbeitsweise führt dazu, daß die Katalysatormasse aus dem Oxid der Zwischenschicht und weiteren zusätzlich aufgebrachten Bestandteilen hergestellt wird, wodurch das Problem der Haftung einer separat aufgebrachten Katalysatormasse auf der Zwischenschicht umgangen wird.

Bei der vorteilhaften Verwendung von Titanoxid als Zwischenschicht wird beim Anlösevorgang eine Titanoxidoberfläche erzeugt, deren $TiO_2$-Bestandteile sich über Titanylsulfat in die Anastasform des Titanoxids umwandeln können und sich vorzüglich als katalytisch aktive Komponente eignen.

Eine gute Anpaßbarkeit des Katalysators an verschiedene Rauchgaszusammensetzungen läßt sich erreichen, wenn in besonders zweckmäßiger Weiterbildung der Erfindung neben Vanadiumverbindungen Zusätze von anderen Elementen wie z.B. Wolfram, Molybdän, Magnesium, Phosphor, Eisen, Chrom verwendet werden.

Es sind zwar schon Verfahren bekannt, die aktives Material direkt auf temperaturbeständige Unterlagen durch Flamm-oder Plasmaspritzen aufbringen. Im Fall der Katalysatorkombination aus Titandioxid und Vanadin sind diese Verfahren jedoch nicht unmittelbar einsetzbar, weil die beim Flamm-bzw. Plasmaspritzen erzeugten Temperaturen die Verdampfungstemperaturen dieser Elemente bei weitem überschreiten. Diese Verfahren würden dadurch zu einer Verarmung der Vanadiumkomponente führen und außerdem Teile des Titandioxids in Rutil umwandeln.

Weitere Einzelheiten der Erfindung werden anhand eines in der FIG dargestellten Ausführungsbeispieles beschrieben. Es zeigt:

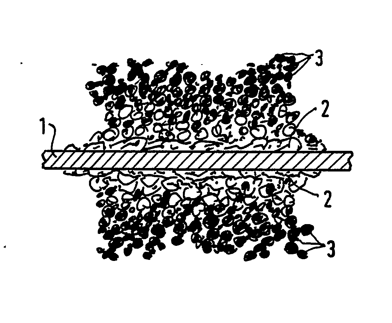

FIG 1 einen Querschnitt des Schichtaufbaus des plattenförmigen Katalysators.

Die FIG zeigt einen Ausschnitt einer Trägerplatte 1, die im Ausführungsbeispiel aus Streckmetall bestehen kann. Auf der Oberfläche der Trägerplatte erkennt man eine aus einer Keramikmasse - im vorliegenden Fall aus Titandioxid bestehende - Zwischenschicht 2. Diese Zwischenschicht besitzt infolge des Spritzauftrages eine außerordentlich hohe Rauhigkeit. Sie bedeckt sämtliche Flächen des Streckmetalls. Auf dieser Zwischenschicht 2 ist die Katalysatormasse 3 aufgetragen.

Bei der Herstellung des erfindungsgemäßen plattenförmigen Katalysators werden Platten aus einem Trägermaterial, im Ausführungsbeispiel aus einem Edelstahl-Streckmetallgitter verwendet. Edelstahl hat einen ähnlichen Ausdehnungskoeffizienten wie die als Zwischenschicht aufzubringende Keramikmasse. Das Streckmetallgitter wird zunächst mechanisch aufgerauht. Dies geschieht durch Sandstrahlen mit Siliciumcarbid oder vorzugsweise mit Korund. Hierbei empfehlen sich Korngrößen von 88 µm bis 220 µm. Dabei ist anzustreben, daß die durch das Strahlen verursachte Rauhigkeit der Körnung der später aufzutragenden Katalysatormasse angepaßt ist.

Auf die so vorbehandelten Platten aus Streckmetall wird die Zwischenschicht aus einer Keramikmasse im vorliegenden Fall aus Titandioxid durch Flamm-oder noch besser Plasmaspritzen aufgebracht. Dabei empfiehlt sich eine reduzierende Gasatmosphäre, bei gasstabilisiertem Plasma eine Argon-Wasserstoff-Atmosphäre. Bei flüssigkeitsstabilisiertem Plasma setzt man Alkohol oder Wasser ein.

Das Spritzmaterial wird bei Einsatz von agglomeriertem Titanoxid vorzugsweise mit einer Körnung von 45 bis 125 µm eingesetzt. Man erhält so rauhe und poröse Titandioxidoberflächen auf dem Streckmetall. Diese Oberflächen verbessern insbesondere wegen ihrer Rauhigkeit und Porosität die Haftung der aufgetragenen Katalysatormasse.

Die Katalysatormasse kann auf dem so vorbehandelten, flamm-oder plasmagespritzten Träger aufgewalzt oder durch Tauchen aufgezogen werden. Im nachfolgenden Sintervorgang verbinden sich die Materialien der Katalysatormasse - Titandioxid - mit denen der Titandioxid-Zwischenschicht.

Es hat sich gezeigt, daß so hergestellte Katalysatoren zur Minderung der Stickoxide in Rauchgasen zum Einsatz entweder in Gegenwart von Ammoniak oder von Kohlenmonoxid als Reduktionsmittel geeignet sind.

Als besonders zweckmäßig hat sich erwiesen, für die Zwischenschicht eine Keramikmasse aus agglomeriertem Titandioxid zu verwenden.

Im Rahmen einer weiteren Verarbeitungsvariante kann die flammoder plasmagespritzte Oberfläche je nach Spritzgut mit Säure bzw. Lauge angelöst werden. Bei $TiO_2$-Oberflächen eignet sich Schwefelsäure. Es wäre auch denkbar hierfür eine andere Säure wie beispielsweise Essigsäure zu verwenden. Durch dieses Anlösen wird das Titanoxid letztlich teilweise in die Anastasmodifikation überführt. Durch Wässern kann anschließend der Säurerest entfernt werden. Es wäre auch möglich, auf den Verfahrensschritt des Wässerns zu verzichten.

Die so aufgeschlossene Titandioxidoberfläche kann nunmehr recht vorteilhaft mit dem weiteren Katalysatorbestandteil belegt werden. Dieses kann durch Eintauchen in einer Lösung oder Aufschwemmung mit den weiteren Katalysatorbestandteilen oder durch Aufdampfen dieser weiteren Katalysatorbestandteile erfolgen. Als solche Katalysatorbestandteile eignen sich neben Vanadium auch Zusätze wie Wolfram, Molybdän, Magnesium, Phosphor, Eisen, Chrom. Der aus der Lösung herausgezogene, abgetropfte Katalysator wird vorgetrocknet und anschließend in einem Ofen calciniert. Auch im Falle des Aufdampfens der weiteren Katalystorbestandteile ist eine abschließende Calcinierung des zusammengesetzten Katalysators erforderlich.

**Ansprüche**

1) Plattenförmiger Katalysator zur Verminderung der Stickoxide in Rauchgasen in Gegenwart eines Reduktionsmittels, bestehend aus einem Träger, einer auf dem Träger aufgebrachten sogenannten Zwischenschicht und einer auf der Zwischenschicht aufgebrachten titanoxidhaltigen Katalysatormasse,
**dadurch gekennzeichnet,**
daß eine Keramikmasse als Zwischenschicht (2) verwendet ist.

2) Plattenförmiger Katalysator nach Anspruch 1,

**dadurch gekennzeichnet,**

daß die Zwischenschicht (2) aus Titandioxid besteht.

3) Plattenförmiger Katalysator nach Anspruch 1,

**dadurch gekennzeichnet,**

daß die Keramikmasse durch Flammspritzen auf den Träger aufgebracht ist.

4) Plattenförmiger Katalysator nach Anspruch 1,

**dadurch gekennzeichnet,**

daß die Keramikmasse (2) durch Plasmaspritzen auf den Träger (1) aufgebracht ist.

5) Plattenförmiger Katalysator nach Anspruch 4,

**dadurch gekennzeichnet,**

daß das Plasmaspritzen in einer reduzierenden Atmosphäre erfolgt.

6) Plattenförmiger Katalysator nach Anspruch 3 oder 4,

**dadurch gekennzeichnet,**

daß eine Keramikmasse (2) mit einer Körnung von 5 bis 160 µm als Spritzgut eingesetzt wird.

7) Plattenförmiger Katalysator nach Anspruch 6,

**dadurch gekennzeichnet,**

daß ein breites Kornspektrum zwischen von 5 bis 160 µm eingesetzt wird.

8) Plattenförmiger Katalysator nach Anspruch 6,

**dadurch gekennzeichnet,**

daß die feinere und grobere Körnung innerhalb des Bandbereiches verstärkt verwendet ist.

9) Plattenförmiger Katalysator nach Anspruch 3,

**dadurch gekennzeichnet,**

daß der Träger (1) vor dem Aufbringen der Zwischenschicht mechanisch aufgerauht ist.

10) Plattenförmiger Katalysator nach Anspruch 9,

**dadurch gekennzeichnet,**

daß die Aufrauhung durch Sand-bzw. Korundstrahlen erfolgt.

11) Plattenförmiger Katalysator nach Anspruch 1,

**dadurch gekennzeichnet,**

daß nichtrostender Stahl als Trägermaterial verwendet ist.

12) Plattenförmiger Katalysator nach Anspruch 1,

**dadurch gekennzeichnet,**

daß das Trägermaterial eine durchbrochene Struktur wie zum Beispiel Streckmetall, Siebe, Tresse aufweist.

13) Plattenförmiger Katalysator nach Anspruch 1,

**dadurch gekennzeichnet,**

daß agglomeriertes Titandioxid als Keramikmasse (2) verwendet ist.

14) Plattenförmiger Katalysator nach Anspruch 1,

**dadurch gekennzeichnet,**

daß als Keramikmasse (2) gesintertes Titandioxid verwendet ist.

15) Plattenförmiger Katalysator nach Anspruch 1,

**dadurch gekennzeichnet,**

daß als Keramikmasse (2) gebrochener Rutil verwendet ist.

16) Plattenförmiger Katalysator nach Anspruch 4,

**dadurch gekennzeichnet,**

daß die Keramikmasse (2) durch ein flüssigkeitsstabilisiertes Plasma aufgebracht wird.

17) Plattenförmiger Katalysator nach Anspruch 1,

**dadurch gekennzeichnet,**

daß die Keramikmasse oberflächlich chemisch angelöst wird, wodurch eine Komponente für die Katalysatormasse bereitgestellt wird.

18) Plattenförmiger Katalysator nach Anspruch 17,

**dadurch gekennzeichnet,**

daß die weiteren Katalysatorbestandteile nach dem Anlösevorgang durch Tränkung in einer Lösung bzw. Suspension dieser weiteren Katalysatorbestandteile aufgebracht werden.

19) Plattenförmiger Katalysator nach Anspruch 18,

**dadurch gekennzeichnet,**

daß als weitere Katalysatorbestandteile Vanadium und/oder Wolfram und/oder Molybdän und/oder Magnesium und/oder Phosphor und/oder Eisen und/oder Chrom verwendet sind.

20) Plattenförmiger Katalysator nach Anspruch 19,

**dadurch gekennzeichnet,**

daß die weiteren Katalysatorbestandteile nach dem Anlösevorgang durch thermische Verfahren wie z.B. Aufdampfen aufgebracht werden.

21) Plattenförmiger Katalysator nach Anspruch 19,

**dadurch gekennzeichnet,**

daß die weiteren Katalysatorbestandteile durch Aufstreuen aufgebracht werden.

22) Plattenförmiger Katalysator nach Anspruch 17,

**dadurch gekennzeichnet,**

daß zur Anlösung der Keramikmasse Schwefelsäure verwendet wird.

23) Plattenförmiger Katalysator nach Anspruch 17,

**dadurch gekennzeichnet,**

daß zur Anlösung der Keramikmasse Essigsäure verwendet wird.

24) Plattenförmiger Katalysator nach Anspruch 17,

**dadurch gekennzeichnet,**

daß zur Anlösung der Keramikmasse Natronlauge verwendet wird.

25) Plattenförmiger Katalysator nach Anspruch 1,

**dadurch gekennzeichnet,**

daß Aluminiumoxid als Zwischenschicht verwendet ist.

26) Plattenförmiger Katalysator nach Anspruch 18,

**dadurch gekennzeichnet,**

daß die so erhaltene Katalysatormasse calciniert wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 370 262 (YUKIO TAKAHASHI) <br> * Ansprüche 1-13 * | 1,11, 12,19 | B 01 D 53/36 <br> B 01 J 37/02 |
| | --- | | |
| A | DE-A-3 501 330 (KRAFTANLAGEN) <br> * Figuren; Ansprüche; Spalte 1, Zeile 47 - Spalte 2, Zeile 30 * | 1 | |
| | --- | | |
| A | GB-A- 832 031 (NORTON GRINDING WHEEL CO.) <br> * Anspruch 1 * | 1,3 | |
| | --- | | |
| A | GB-A-2 026 336 (HITACHI) | | |
| | ----- | | |

| RECHERCHIERTE SACHGEBIETE (Int. Cl.4) |
|---|
| B 01 D 53/00 <br> B 01 J 37/00 |

Der vorliegende Recherchenbericht wurde für alle Patentansprüche erstellt.

| Recherchenort <br> DEN HAAG | Abschlußdatum der Recherche <br> 15-07-1987 | Prüfer <br> BOGAERTS M.L.M. |
|---|---|---|